(19) Europäisches Patentamt
European Patent Office
Office européen des brevets

(11) EP 4 246 027 A1

(12) **EUROPEAN PATENT APPLICATION**
published in accordance with Art. 153(4) EPC

(43) Date of publication:
20.09.2023 Bulletin 2023/38

(51) International Patent Classification (IPC):
F16K 31/04 (2006.01)          F16K 37/00 (2006.01)
F16K 1/00 (2006.01)

(21) Application number: 21890978.6

(22) Date of filing: 28.10.2021

(52) Cooperative Patent Classification (CPC):
F16K 1/00; F16K 31/04; F16K 37/00

(86) International application number:
PCT/CN2021/127140

(87) International publication number:
WO 2022/100451 (19.05.2022 Gazette 2022/20)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 10.11.2020  CN 202011248731

(71) Applicant: Zhejiang Dunan Artificial Environment
Co., Ltd.
Shaoxing, Zhejiang 311835 (CN)

(72) Inventors:
• SONG, Zhiguo
Shaoxing, Zhejiang 311835 (CN)
• WANG, Fugang
Shaoxing, Zhejiang 311835 (CN)
• DENG, Yuezhong
Shaoxing, Zhejiang 311835 (CN)
• DONG, Shenghai
Shaoxing, Zhejiang 311835 (CN)

(74) Representative: Penza, Giancarlo
Bugnion S.p.A.
Viale Lancetti, 17
20158 Milano (IT)

(54) **ELECTRONIC EXPANSION VALVE AND MONITORING METHOD THEREFOR**

(57) An electronic expansion valve, comprising: a frame body (10) provided with an accommodating cavity (20) and a mounting cavity (30); an induction magnetic ring (40) movably disposed in the accommodating cavity in the height direction of the accommodating cavity, the mounting cavity being located at least on the outer circumferential side of the movement area of the induction magnetic ring in the accommodating cavity; and a Hall sensor (50) located in the mounting cavity and disposed around the accommodating cavity, the Hall sensor having a plate body (52) and at least two sensing structures (51), the plat body is provided with at least two mounting recesses, the at least one sensing structures being disposed in the at least two mounting recesses in a one-to-one correspondence, the at least two mounting recesses being located at the same height, and the induction magnetic ring being always in the detection range of the sensing structures. The electronic expansion valve solves the problem in the prior art of inability to determine the rotation of a rotor. Also disclosed in a monitoring method for the electronic expansion valve.

Fig. 1

EP 4 246 027 A1

## Description

## Technical Field

The present invention relates to the technical field of flow control apparatuses, and in particular to an electronic expansion valve and a monitoring method for an electronic expansion valve.

## Background

Presently, an electronic expansion valve includes an electric motor. The electric motor is controlled by a controller to rotate, drives a rotor to rotate, and no longer rotates or no longer rotates uniformly when encountering an obstacle during rotation. When the electronic expansion valve no longer rotates or no longer rotates uniformly, the electronic expansion valve will abnormally work if a controller may not accurately detect rotation blocking and take corresponding measures; or the electronic expansion valve will also abnormally work if the controller wrongly reports rotation information of the electric motor. The rotor of the electronic expansion valve has two rotation directions, is in a rising phase when rotating towards a first direction, and is in a falling phase when rotating towards a second direction. A rotation condition of the rotor may not be determined by the controller.

That is, the rotation condition of the rotor may not be determined in the electronic expansion valve in the related art.

## Summary

The main objective of the present invention is to provide an electronic expansion valve and a monitoring method for an electronic expansion valve, so as to solve the problem that a rotation condition of a rotor may not be determined in an electronic expansion valve in the related art.

In order to achieve the above objective, according to one aspect of the present invention, an electronic expansion valve is provided. The electronic expansion valve includes: a frame body, the frame body being provided with an accommodating cavity and a mounting cavity; an induction magnetic ring, the induction magnetic ring being movably arranged in the accommodating cavity in a height direction of the accommodating cavity, and the mounting cavity being at least located on a circumferential outer side of an active area of the accommodating cavity in which the induction magnetic ring is located; and a Hall sensor, the Hall sensor being located in the mounting cavity and being arranged around a circumferential side of the accommodating cavity, the Hall sensor being provided with a plate body and at least two induction structures, the plat body being provided with at least two mounting grooves, the at least two induction structures being arranged at the at least two mounting grooves in a one-to-one corresponding manner, the at least two mounting grooves being located at the same height, and the induction magnetic ring being always in a detection range of the induction structures.

In an embodiment of the present invention, an included angle X between projections of centers of the two adjacent induction structures and a center of the induction magnetic ring in a height direction of the accommodating cavity and a number n of magnetic poles of the induction magnetic ring satisfy:

$$X=N*(360/n)+(360/2/n) \quad \text{Equation (1)}$$

a unit of the included angle X being a degree; and N being an integer.

In an embodiment of the present invention, distances between the plurality of induction structures and the induction magnetic ring are the same.

In an embodiment of the present invention, a distance L between centers of the two adjacent induction structures, a number n of magnetic poles of the induction magnetic ring and a projection distance h from a middle point of a connecting line of centers of the two adjacent induction structures to a center of the induction magnetic ring in a height direction of the accommodating cavity satisfy:

$$L=2*h*\tan[(2*N+1)*\pi/(2*n)] \quad \text{Equation (2)}.$$

In an embodiment of the present invention, the induction magnetic ring has a rising position and a falling position, and a circumferential side wall of the induction magnetic ring includes an induction surface section, a distance between the induction surface section and an inner side wall of the accommodating cavity being unchanged in a height direction of the accommodating cavity, a projection of a top side of the induction surface section to the Hall sensor being located in the induction structures when the induction magnetic ring is located in the falling position, and a projection of a bottom side of the induction surface section to the Hall sensor being located in the induction structures when the induction magnetic ring is located in the rising position.

In an embodiment of the present invention, the circumferential side wall of the induction magnetic ring further includes an upper protective surface section located above the induction surface section and a lower protective surface section located below the induction surface section, the upper protective surface section being in arc transition with a top surface of the induction magnetic ring, and the lower protective surface section being in arc transition with a bottom surface of the induction magnetic ring.

In an embodiment of the present invention, a height of the induction surface section is greater than a motion stroke of the induction magnetic ring in the height direction of the accommodating cavity.

In an embodiment of the present invention, the electronic expansion valve further includes drive rotors, where the drive rotors are arranged in the accommodating cavity, the induction magnetic ring is arranged on one side of the drive rotors close to the mounting cavity, the drive rotors drive the induction magnetic ring to rotate, and the drive rotors have a number the same as that of the magnetic poles of the induction magnetic ring.

In an embodiment of the present invention, the Hall sensor is attached to an outer side wall of the accommodating cavity.

In an embodiment of the present invention, the electronic expansion valve further includes fixing frames, where the Hall sensor is attached to the outer side wall of the accommodating cavity by means of the fixing frames, and the fixing frames are attached to the Hall sensor, so as to limit the Hall sensor between the outer side wall of the accommodating cavity and the fixing frames.

According to another aspect of the present invention, a monitoring method for an electronic expansion valve is provided. The electronic expansion valve has a Hall sensor for monitoring an induction magnetic ring of the electronic expansion valve and drive rotors driving the induction magnetic ring to rotate, the Hall sensor is provided with at least two induction structures, and the at least two induction structures are spaced around a circumferential side of the induction magnetic ring; and the monitoring method for an electronic expansion valve includes: simultaneously collecting, by the induction structures, a motion condition of the induction magnetic ring respectively, so as to form moving magnetic field curves; comparing the moving magnetic field curves collected by the different induction structures; and determining motion conditions of the drive rotors according to phase differences and/or periods of the different moving magnetic field curves.

In an embodiment of the present invention, when the motion conditions of the drive rotors are determined according to the phase differences and/or periods of the different moving magnetic field curves, the motion conditions of the drive rotors at least include whether the drive rotors rotate, the drive rotors being in a rising phase and the drive rotors being in a falling phase.

In an embodiment of the present invention, when the motion conditions of the drive rotors are determined according to the phase differences and/or the periods of the different moving magnetic field curves, the drive rotors being in the rising phase or the falling phase is determined according to the phase differences of the different moving magnetic field curves; and whether the drive rotors rotate is determined according to the periods of the different moving magnetic field curves.

In an embodiment of the present invention, the electronic expansion valve is provided with an accommodating cavity and a mounting cavity, the induction magnetic ring is movably arranged in the accommodating cavity in a height direction of the accommodating cavity, and the mounting cavity is at least located on a circumferential outer side of an active area of the accommodating cavity in which the induction magnetic ring is located; and the at least two induction structures are located in the mounting cavity and being arranged around a circumferential side of the accommodating cavity, and an included angle X between projections of centers of induction portions of the two adjacent induction structures and a center of the induction magnetic ring in the height direction of the accommodating cavity and a number n of magnetic poles of the induction magnetic ring satisfy:

$$X=N*(360/n)+(360/2/n) \quad \text{Equation (1)}$$

a unit of the included angle X being a degree; and N being an integer.

In an embodiment of the present invention, distances between the at least two induction structures and the induction magnetic ring are the same.

In an embodiment of the present invention, a distance L between the centers of the two adjacent induction structures, a number n of the magnetic poles of the induction magnetic ring and a projection distance r from a middle point of a center connecting line of the two adjacent induction structures to the center of the induction magnetic ring in the height direction of the accommodating cavity satisfy:

$$L=2*h*\tan[(2*N+1)*\pi/(2*n)] \quad \text{Equation (2).}$$

The technical solution of the present invention is applied, and the electronic expansion valve includes the frame body, the induction magnetic ring and the Hall sensor, where the frame body is provided with the accommodating cavity and the mounting cavity; the induction magnetic ring is movably arranged in the accommodating cavity in the height direction of the accommodating cavity, and the mounting cavity is at least located in the circumferential outer side of the active area of the accommodating cavity in which the induction magnetic ring is located; and the Hall sensor is located in the mounting cavity, and is arranged around the circumferential side of the accommodating cavity, the plate body is provided with the at least two mounting grooves, the at least two mounting grooves are located at the same height, and the induction magnetic ring is always located in the detection range of the induction structures.

The accommodating cavity is provided, such that the induction magnetic ring is able to move in the height direction of the accommodating cavity, and moreover, the induction magnetic ring further rotates in the accommodating cavity, and arrangement of the accommodating cavity reduces interference of other structural members on motion of the induction magnetic ring, such that the induction magnetic ring is able to work stably. By arranging the plurality of induction structures, each induction structure is able to collect a magnetic field of the induction magnetic ring during motion and form the moving magnetic field curve. By analyzing a relation between the plurality of moving magnetic field curves to determine the motion condition of the induction magnetic ring, whether the induction magnetic ring is in the rising phase or the falling phase is further determined, and whether the induction magnetic ring rotates is able to be further determined. The problem that a rotation condition of a rotor may not be determined in an electronic expansion valve in the related art is solved.

## Brief Description of the Drawings

The accompanying drawings of the description forming a part of the present invention serve to provide a further understanding of the present invention, and illustrative examples of the present invention and the description of the illustrative examples serve to explain the present invention and are not to be construed as unduly limiting the present invention. In the accompanying drawings:

Fig. 1 shows a schematic structural diagram of an electronic expansion valve according to an embodiment of the present invention;

Fig. 2 shows an enlarged view of a portion P in Fig. 1;

Fig. 3 shows a view of the electronic expansion valve of Fig. 1 from an angle;

Fig. 4 shows a schematic diagram of an angle relation between an induction magnetic ring and a Hall sensor in Fig. 3;

Fig. 5 shows a schematic structural diagram of the Hall sensor in Fig. 1;

Fig. 6 shows a sine wave signal generated when the induction magnetic ring rotates in a forward direction in Fig. 1;

Fig. 7 shows a sine wave signal generated when the induction magnetic ring rotates in a reverse direction in Fig. 1;

Fig. 8 shows a square wave signal generated when the induction magnetic ring rotates in the forward direction in Fig. 1; and

Fig. 9 shows a square wave signal generated when the induction magnetic ring rotates in the reverse direction in Fig. 1.

The above-mentioned figures include the following reference numerals:
10, frame body; 20, accommodating cavity; 30, mounting cavity; 40, induction magnetic ring; 41, induction surface section; 42, upper protective surface section; 43, lower protective surface section; 50, Hall sensor; 51, induction structure; 52, plate body; and 60, drive rotor.

## Detailed Description of the Embodiments

It should be noted that examples in the present invention and features in the examples may be combined with each other without conflict. The present invention will be described in detail below with reference to the accompanying drawings in conjunction with the examples.

It should be pointed out that all technical and scientific terms used in the present invention have the same meanings as commonly understood by those of ordinary skill in the art to which the present invention belongs unless otherwise indicated.

In the present invention, in the absence of any description to the contrary, orientation words, such as "upper, lower, top and bottom", used are usually used for directions shown in the figures, or used for an upright, vertical or gravity direction of a component itself; and similarly, for the convenience of understanding and description, "inside and outside" refers to the inside and outside relative to contours of the components themselves, but the above orientation words are not used to limit the present invention.

In order to solve the problem that a rotation condition of a rotor may not be determined in an electronic expansion valve in the related art, the present invention provides an electronic expansion valve and a monitoring method for an electronic expansion valve.

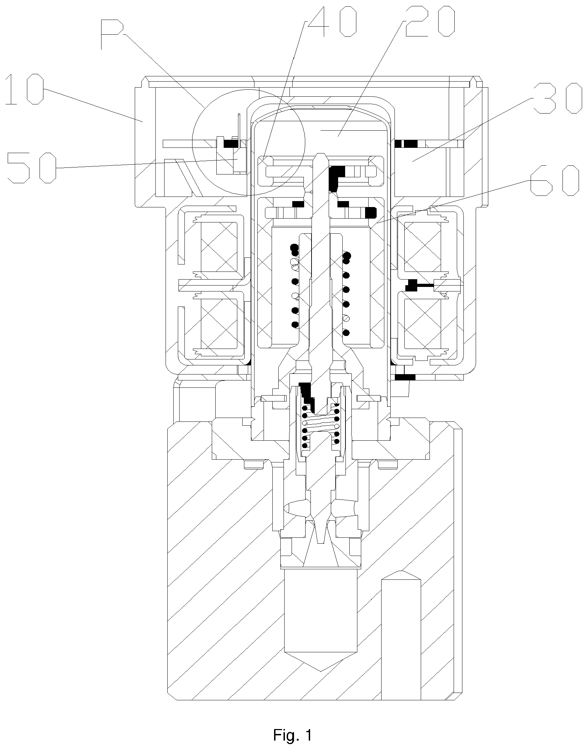

As shown in Figs. 1-9, an electronic expansion valve includes a frame body 10, an induction magnetic ring 40 and a Hall sensor 50, where the frame body 10 is provided with an accommodating cavity 20 and a mounting cavity 30; the induction magnetic ring 40 is movably arranged in the accommodating cavity 20 in a height direction of the accommodating cavity 20, and the mounting cavity 30 is at least located on a circumferential outer side of an active area of the accommodating cavity 20 in which the induction magnetic ring 40 is located; and the Hall sensor 50 is located in the mounting cavity 30 and is arranged around a circumferential side of the accommodating cavity 20, the Hall sensor 50 is provided with a plate body 52 and at least two induction structures 51, the plat body 52 is provided with at least two mounting grooves, the at least two induction structures 51 are arranged at the at least two mounting grooves in a one-to-one corresponding manner, the at least two mounting grooves are located at the same height, and the induction magnetic ring 40 is always in a detection range of the induction structures 51.

The accommodating cavity 20 is provided, such that the induction magnetic ring 40 is able to move in the height direction of the accommodating cavity 20, and moreover, the induction magnetic ring 40 further rotates in the accommodating cavity 20, and arrangement of the accommodating cavity 20 reduces interference of other structural members on motion of the induction magnetic ring 40, such that the induction magnetic ring 40 works stably. By arranging the plurality of induction structures 51, each induction structure 51 collects a magnetic field of the induction magnetic ring 40 during motion and form a moving magnetic field curve. By analyzing a relation between the plurality of moving magnetic field curves to determine motion conditions of drive rotors 60, whether the drive rotors 60 are in the rising phase or the falling phase is further determined, and whether the drive rotors 60 rotate is further determined. The problem that a rotation condition of a rotor may not be determined in an electronic expansion valve in the related art is solved.

It should be noted that the plurality of induction structures 51 are arranged on one Hall sensor 50, such that the plurality of induction structures 51 synchronously collect the magnetic field at the induction magnetic ring 40, and the two induction structures 51 are integrated on the plate body 52, such that design of positions of the two induction structures 51 and a distance between the two induction structures 51 is facilitated, and mounting of the Hall sensor 50 is facilitated.

As shown in Fig. 1, the electronic expansion valve further includes drive rotors 60, where the drive rotors 60 are arranged in the accommodating cavity 20, the induction magnetic ring 40 is arranged on one side of the drive rotors 60 close to the mounting cavity 30, the drive rotors 60 drive the induction magnetic ring 40 to rotate, and the drive rotors 60 have the number the same as that of the magnetic poles of the induction magnetic ring 40. The drive rotors 60 drive the induction magnetic ring 40 to rotate, and the number of magnetic poles of the drive rotors 60 is the same as that of the magnetic poles of the induction magnetic ring 40, such that the influence of the magnetic poles of the drive rotors 60 on the magnetic field generated by the induction magnetic ring 40 is avoided, so as to ensure that the Hall sensor 50 is able to stably work.

Of course, the induction magnetic ring 40 and the drive rotors 60 are able to integrated, such that synchronous rotation of the drive rotors 60 and the induction magnetic ring 40 is facilitated.

It should be noted that the drive rotors 60 drive the induction magnetic ring 40 to rotate, the drive rotors 60 are connected to the induction magnetic ring 40 together, and the induction magnetic ring 40 is synchronously driven to move when the drive rotors 60 rotate. Or, the drive rotors 60 rotate, such that the induction magnetic ring 40 rotates; the drive rotors 60 are in a rising phase, such that the induction magnet ring 40 is in a rising phase; and the drive rotors 60 are in a falling phase, such that the induction magnetic ring 40 is in a falling phase. That is, motion of the induction magnetic ring 40 is indicated motion of the drive rotors 60. By analyzing a relation between the at least two moving magnetic field curves, the motion conditions of the drive rotors 60 also is determined, whether the drive rotors 60 are in the rising phase or the falling phase is further determined, and whether the drive rotors 60 rotate is further determined.

It should be noted that since rotation directions of the drive rotors are different when the drive rotors 60 are in the rising phase and in the falling phase, phase differences of the two moving magnetic field curves are opposite. When the electronic expansion valve is designed, it is necessary to give whether the drive rotors are the rising phase or the falling phase when which curve precedes. Or, it is necessary to give that the positive or negative phase difference of the two moving magnetic field curves corresponds to the rising phase or the falling phase, so as to determine whether the drive rotors 60 are in the rising phase or the falling phase.

With the two induction structures 51 as an example, one induction structure 51 is marked as a first induction structure, the other induction structure 51 is marked as a second induction structure, and a phase difference is the moving magnetic field curve of the first induction structure minus the moving magnetic field curve of the second induction structure. The drive rotors 60 being in the rising phase is determined when the phase difference of the two moving magnetic field profiles is positive, and the drive rotors 60 being in the falling phase is determined when the phase difference of the two moving magnetic field curves is negative. Thus, whether the drive rotors 60 are in the rising phase or the falling phase is determined according to the positive or negative of the phase difference of the two moving magnetic field curves.

Since the induction magnetic ring 40 rotates uniformly, the moving magnetic field curve of the induction magnetic ring 40 collected by the induction structures 51 is regular, a period of the moving magnetic field curve of the induction magnetic ring 40 is changed when the drive rotors 60 no longer rotate or no longer rotate uniformly, and whether rotation of the electronic expansion valve is blocked is determined by observing the period of the moving magnetic field curve. When the electronic expansion valve is designed, the period of the moving magnetic field curve of the induction magnetic ring 40 during normal motion is collected in advance. During working of the electronic expansion valve, if the period of the moving magnetic field curve is less than a period of the moving magnetic field curve of the induction magnetic ring 40 during normal motion, the drive rotors 60 no longer rotate or no longer rotate uniformly.

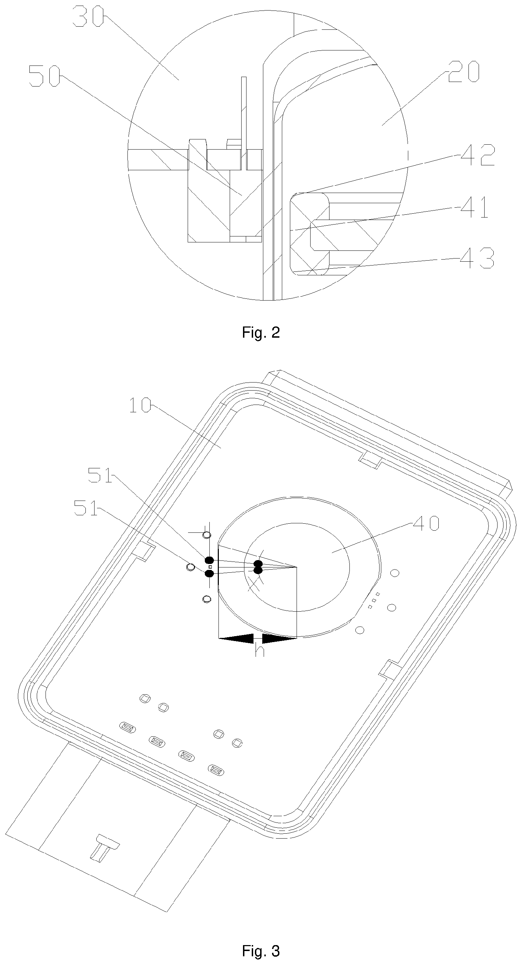

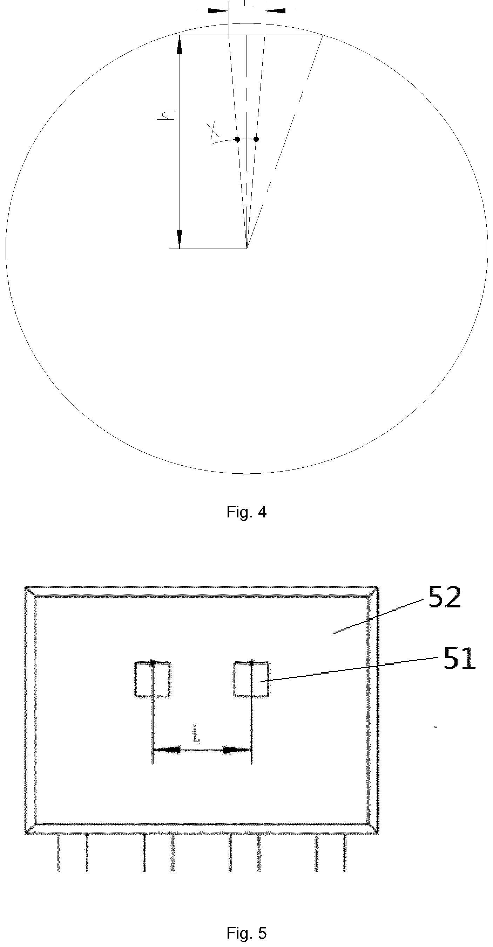

As shown in Figs. 3 and 4, an included angle X between projections of centers of the two adjacent induction structures 51 and a center of the induction magnetic ring 40 in a height direction of the accommodating cavity 20 and a number n of magnetic poles of the induction magnetic ring 40 satisfy:

$$X=N*(360/n)+(360/2/n) \quad \text{Equation (1)}$$

a unit of the included angle X being a degree; and N being an integer.

The included angle between the two adjacent Hall sensors 50 is determined according to the number n of magnetic poles of the induction magnetic ring 40, and moreover, how many induction structures 51 are placed are also computed. Such an arrangement is able to accurately determine the motion condition of the induction magnetic ring 40 by means of the moving magnetic field curve.

It should be noted that an angle is generally an acute, and therefore a degree of the included angle X is greater than 0 degree and less than or equal to 180 degrees. Thus, computation of how many Hall sensors 50 are placed is facilitated.

A relation between the included angle X and the number n of the magnetic poles is a check function.

Specifically, distances between the plurality of induction structures 51 and the induction magnetic ring 40 are the same. Such an arrangement enables the strength of a magnetic field of the induction magnetic ring 40 collected by each induction structure 51 to be the same, and peaks and periods of the plurality of moving magnetic field curves are the same, such that determination of the motion conditions of the drive rotors 60 is facilitated by means of the plurality of moving magnetic field curves.

As shown in Figs. 3 and 4, a distance L between centers of the two adjacent induction structures 51, the number n of magnetic poles of the induction magnetic ring 40 and a projection distance h from a middle point of a connecting line of centers of the two adjacent induction structures 51 to a center of the induction magnetic ring 40 in a height direction of the accommodating cavity 20 satisfy:

$$L = 2*h*\tan[(2*N+1)*\pi/(2*n)] \quad \text{Equation (2)}$$

A unit of the distance L is a centimeter, and a unit of the projection distance h is a centimeter.

Of course, the distance L and the projection distance h are length units. The units of the distance L and the projection distance h also are length units of millimeters, meters, etc.

Under the condition that the number n of the magnetic poles of the induction magnetic ring 40 is determined, there is a linear function between the distance L and the projection distance h.

The distance L between the centers of the two adjacent induction structures 51 is related to the projection distance h from the middle point of the connecting line of the centers of the two adjacent induction structures 51 to the center of the induction magnetic ring 40 in the height direction of the accommodating cavity 20, and the distance L between the centers of the designed two adjacent induction structures 51 is different in the different number n of the magnetic poles of the induction magnetic ring 40.

In an embodiment, the induction magnetic ring 40 has a rising position and a falling position, and a circumferential side wall of the induction magnetic ring 40 includes an induction surface section 41, a distance between the induction surface section 41 and an inner side wall of the accommodating cavity 20 being unchanged in the height direction of the accommodating cavity 20, a projection of a top side of the induction surface section 41 to the Hall sensor 50 being located in the induction structures 51 when the induction magnetic ring 40 is located in the falling position, and a projection of a bottom side of the induction surface section 41 to the Hall sensor 50 being located in the induction structures 51 when the induction magnetic ring 40 is located in the rising position. The magnetic poles of the induction magnetic ring 40 are arranged on the induction surface section 41, and the distance between the induction surface section 41 and an inner side wall of the accommodating cavity 20 is unchanged in the height direction of the accommodating cavity 20, such that the induction structures 51 collect the periodically stable magnetic field for determining the motion conditions of the drive rotors 60 by means of the moving magnetic field curves. Such an arrangement enables the induction structures 51 to always detect the induction surface section 41, so as to ensure that the Hall sensor 50 may monitor the motion condition of the induction magnetic ring 40 in real time.

As shown in Fig. 2, the circumferential side wall of the induction magnetic ring 40 further includes an upper protective surface section 42 located above the induction surface section 41 and a lower protective surface section 43 located below the induction surface section 41, the upper protective surface section 42 being in arc transition with a top surface of the induction magnetic ring 40, and the lower protective surface section 43 being in arc transition with a bottom surface of the induction magnetic ring 40. Arrangement of the upper protective surface section 42 and the lower protective surface section 43 is able to protect the induction surface section 41, so as to avoid collision of the induction surface section 41 by other structures, thereby ensuring working stability of the induction surface section 41, so as to produce a stable magnetic field. The upper protective surface section 42 is in arc transition with the top surface of the induction magnetic ring 40, and the lower protective surface section 43 is in arc transition with the bottom surface of the induction magnetic ring 40, and such an arrangement facilitates motion of the induction magnetic ring 40 in the accommodating cavity 20, such that scratching of the induction magnetic ring 40 against the inner side wall of the accommodating cavity 20 is avoided, and working stability of the induction magnetic ring 40 is ensured.

Specifically, a height of the induction surface section 41 is greater than a motion stroke of the induction magnetic ring 40 in the height direction of the accommodating cavity 20. Such an arrangement enables the induction surface section 41 to always be in the detection range of the induction structures 51, and ensures that the induction structures 51 is able to detect the induction surface section 41 in real time.

As shown in Fig. 1, the Hall sensor 50 is attached to an outer side wall of the accommodating cavity 20. Such as arrangement facilitates mounting of the Hall sensor 50, and facilitates the same distance between the Hall sensor 50 and the induction magnetic ring 40, so as to ensure detection stability of the Hall sensor 50.

It should be noted that the accommodating cavity 20 has a cylindrical shape, and the induction magnetic ring 40 has a circular pie shape.

The electronic expansion valve further includes a plurality of fixing frames, where the Hall sensor 50 is attached to the outer side wall of the accommodating cavity 20 by means of the fixing frames, and the fixing frames are attached to the Hall sensor 50, so as to limit the Hall sensor 50 between the outer side wall of the accommodating cavity 20 and the fixing frames. Arrangement of the fixing frames provides a mounting position for the Hall sensor 50, such that the Hall sensor 50 is attached to the outer side wall of the accommodating cavity 20. The fixing frames further protect the Hall sensor 50, so as to avoid collision of other structural members on the Hall sensor 50, thereby ensuring stable work of the Hall sensor 50.

The electronic expansion valve has a Hall sensor 50 for monitoring an induction magnetic ring 40 of the electronic expansion valve and drive rotors 60 driving the induction magnetic ring 40 to rotate, the Hall sensor 50 is provided with a plurality of induction structures 51, and the plurality of induction structures 51 are spaced around a circumferential side of the induction magnetic ring 40; and the monitoring method for an electronic expansion valve includes: simultaneously collect, by the induction structures 51, a motion condition of the induction magnetic ring 40 respectively, so as to form moving magnetic field curves; compare the moving magnetic field curves collected by the different induction structures 51; and determine motion conditions of the drive rotors 60 according to phase differences and/periods of the different moving magnetic field curves.

By arranging the plurality of induction structures 51, each induction structure 51 collects the magnetic field of the induction magnetic ring 40 during motion and form a moving magnetic field curve. The motion conditions of the drive rotors 60 are determined by analyzing a relation of the plurality of moving magnetic field curves.

It should be noted that when the drive rotors 60 drives the induction magnetic ring 40 to rotate, the drive rotors 60 and the induction magnetic ring 40 rotate synchronously, and therefore the motion conditions of the drive rotors is reflected by detecting changes in the magnetic field of the induction magnetic ring 40 during motion.

Specifically, when the motion conditions of the drive rotors 60 are determined according to the phase differences and/or periods of the different moving magnetic field curves, the motion conditions of the drive rotors 60 at least include whether the drive rotors 60 rotate, the drive rotors 60 being in a rising phase and the drive rotors 60 being in a falling phase. Since rotation directions of the drive rotors are different when the drive rotors 60 are in the rising phase and in the falling phase, phase differences of the two moving magnetic field curves are opposite. Therefore, whether the drive rotors 60 are in the rising phase or the falling phase is determined according to the phase differences. Since the drive rotors 60 rotate uniformly, the moving magnetic field curves of the drive rotors 60 collected by the induction structures 51 are regular, periods of the moving magnetic field curves of the drive rotors 60 are changed when the drive rotors 60 no longer rotate or no longer rotate uniformly, and whether rotation of the electronic expansion valve is blocked is determined by observing the period of the moving magnetic field curve.

Specifically, when the motion conditions of the drive rotors 60 are determined according to the phase differences and/or the periods of the different moving magnetic field curves, the drive rotors 60 being in the rising phase or the falling phase is determined according to the phase differences of the different moving magnetic field curves; and whether the drive rotors 60 rotate is determined according to the periods of the different moving magnetic field curves.

It should be noted that since rotation directions of the drive rotors are different when the drive rotors 60 are in the rising phase and in the falling phase, phase differences of the two moving magnetic field curves are opposite. When the electronic expansion valve is designed, it is necessary to give whether the drive rotors are the rising phase or the falling phase when which curve precedes. Or, it is necessary to give that the positive or negative phase difference of the two moving magnetic field curves corresponds to the rising phase or the falling phase, so as to determine whether the drive rotors 60 are in the rising phase or the falling phase.

Since the drive rotors 60 rotate uniformly, the moving magnetic field curve of the induction magnetic ring 40 collected by the Hall sensor 50 is regular, periods of the moving magnetic field curves of the drive rotors 60 are changed when the drive rotors 60 no longer rotate or no longer rotate uniformly, and whether the drive rotors 60 rotate normally is determined by observing the period of the moving magnetic field curve. When the electronic expansion valve is designed, the period of the moving magnetic field curve of the induction magnetic ring 40 during normal motion is collected in advance. During working of the electronic expansion valve, if the period of the moving magnetic field curve is less than a period of the moving magnetic field curve of the induction magnetic ring 40 during normal motion, the drive rotors 60 no longer rotate normally.

With the two induction structures 51 as an example, the two induction structures 51 are arranged, when the motion conditions of the drive rotors 60 are determined according to the phase differences and/or the periods of the different moving magnetic field curves, if the phase difference of the two moving magnetic field curves is positive, the drive rotors 60 being in the rising phase is determined; and if the phase difference of the two moving magnetic field curves is negative, the drive rotors 60 being in the falling phase is determined. One induction structure 51 is marked as a first induction structure, the other induction structure 51 is marked as a second induction structure, and the phase difference is the moving magnetic field curve of the first induction structure 51 minus the moving magnetic field curve of the second induction structure 51. The drive rotors 60 being in the rising phase is determined when the phase difference of the two moving magnetic field curves is positive, and the drive rotors 60 being in the falling phase is determined when the phase difference of the two moving magnetic field curves is negative. Therefore, whether the drive rotors 60 are in the rising phase or the falling phase is determined according to the positive or negative phase difference of the two moving magnetic field curves.

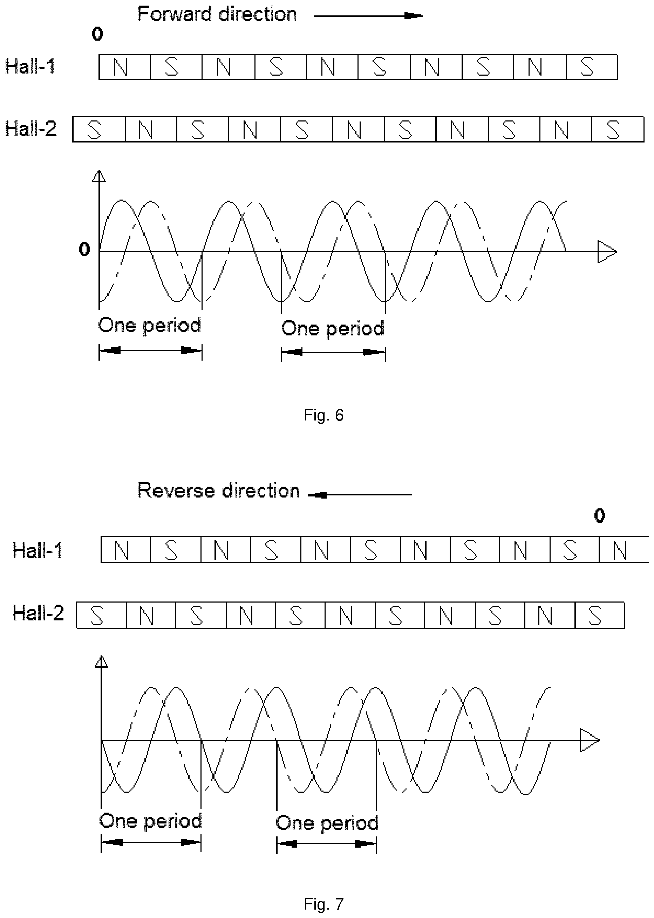

In particular embodiments shown in Figs. 6 and 7, a solid line is a moving magnetic field curve of a first induction structure, and a dashed line is a moving magnetic field curve of a second induction structure. As shown in Fig. 6, when drive rotors 60 rotate in a forward direction, the solid line is ahead of the dashed line, and a phase difference is positive. As shown in Fig. 7, when drive rotors 60 rotate in a reverse direction, the dashed line is ahead of the solid line, and a phase difference is negative.

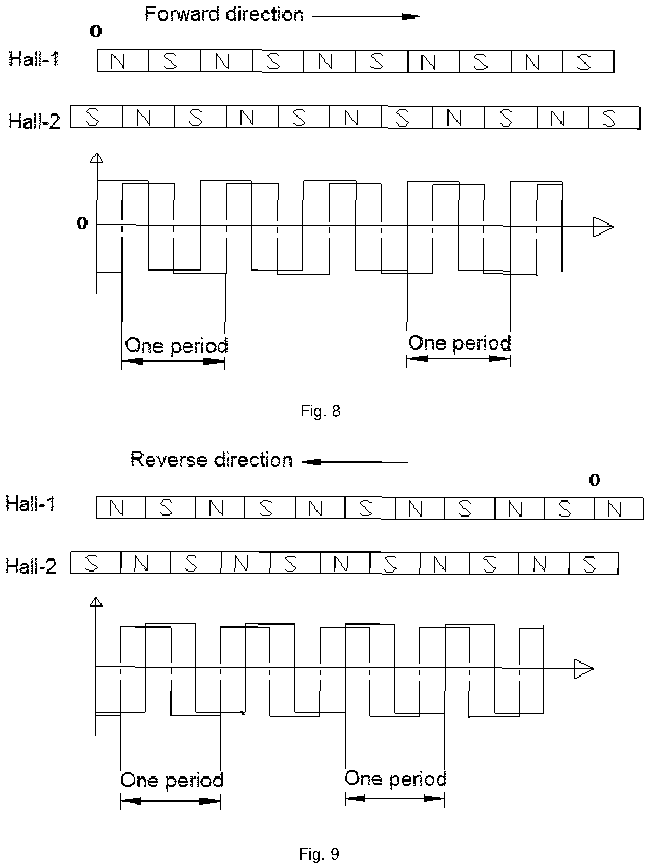

In particular embodiments shown in Figs. 8 and 9, moving magnetic field curves of induction structures 51 are square waves, a solid line is the moving magnetic field curve of a first induction structure, and a dashed line is a moving magnetic field curve of a second induction structure. As shown in Fig. 8, when drive rotors 60 rotate in a forward direction, the solid line is ahead of the dashed line, and a phase difference is positive. As shown in Fig. 9, when drive rotors 60 rotate in a reverse direction, the dashed line is ahead of the solid line, and a phase difference is negative.

Of course, the plurality of induction structures 51 also are arranged, the phase difference of the moving magnetic field curves of the two induction structures 51 is only referred, and the phase difference of the moving magnetic field curves of the plurality of induction structures 51 is also referred.

As shown in Figs. 3 and 4, an electronic expansion valve is provided with an accommodating cavity 20 and a mounting cavity 30, the induction magnetic ring 40 is movably arranged in the accommodating cavity 20 in a height direction of the accommodating cavity 20, and the mounting cavity 30 is at least located on a circumferential outer side of an active area of the accommodating cavity 20 in which the induction magnetic ring 40 is located; and the plurality of induction structures 51 are located in the mounting cavity 30 and are arranged around a circumferential side of the accommodating cavity 20,

and an included angle X between projections of centers of induction portions of the two adjacent induction structures 51 and a center of the induction magnetic ring 40 in the height direction of the accommodating cavity 20 and the number n of magnetic poles of the induction magnetic ring 40 satisfy:

$$X = N*(360/n) + (360/2/n) \quad \text{Equation (1)}$$

a unit of the included angle X being a degree; and N being an integer.

The included angle between the two adjacent induction structures 51 is determined according to the number n of magnetic poles of the induction magnetic ring 40, and moreover, how many induction structures 51 are placed are also computed. Such an arrangement is able to accurately determine the motion conditions of the drive rotors 60 by means of the moving magnetic field curve.

Specifically, distances between the plurality of induction structures 51 and the induction magnetic ring 40 are the same. Such an arrangement enables the strength of a magnetic field of the induction magnetic ring 40 collected by each induction structure 51 to be the same, and peaks and periods of the plurality of moving magnetic field curves are the same, such that determination of the motion conditions of the drive rotors 60 is facilitated by means of the plurality of moving magnetic field curves.

As shown in Figs. 3 and 4, a distance L between centers of the two adjacent induction structures 51, the number n of magnetic poles of the induction magnetic ring 40 and a projection distance h from a middle point of a connecting line of centers of the two adjacent induction structures 51 to a center of the induction magnetic ring 40 in a height direction of the accommodating cavity 20 satisfy:

$$L = 2*h*\tan[(2*N+1)*\pi/(2*n)] \quad \text{Equation (2)}$$

A unit of the distance L is a centimeter, and a unit of the projection distance h is a centimeter.

Of course, the distance L and the projection distance h are length units. The units of the distance L and the projection distance h also are length units of millimeters, meters, etc.

The distance L between the centers of the two adjacent induction structures 51 is related to the projection distance h from the middle point of the connecting line of the centers of the two adjacent induction structures 51 to the center of the induction magnetic ring 40 in the height direction of the accommodating cavity 20, and the distance L between the centers of the designed two adjacent induction structures 51 is different in the different number n of the magnetic poles of the induction magnetic ring 40.

The electronic expansion valve further includes a coil assembly, a valve body assembly and a sleeve, where the coil assembly is arranged in the frame body 10 and located on an outer side of the drive rotors 60, the valve body assembly includes a valve seat and a valve needle, the valve needle moving along with the drive rotors 60 to open and close a valve port on the valve seat, the sleeve is arranged in the accommodating cavity 20, is fixedly connected to the valve body assembly, and is provided with a cavity, and the drive rotors 60 move in the sleeve.

What are described above are merely the preferred examples of the present invention and are not used for limiting the present invention, and various changes and modifications may be made to the present invention by those skilled in the art. Any modifications, equivalent substitutions, improvements, etc. within the spirit and principles of the present invention should all fall within the scope of protection of the present invention.

## Claims

1. An electronic expansion valve, comprising:

   a frame body (10), the frame body (10) being provided with an accommodating cavity (20) and a mounting cavity (30);
   an induction magnetic ring (40), the induction magnetic ring (40) being movably arranged in the accommodating cavity (20) in a height direction of the accommodating cavity (20), and the mounting cavity (30) being at least located on a circumferential outer side of an active area of the accommodating cavity (20) in which the induction magnetic ring (40) is located; and
   a Hall sensor (50), the Hall sensor (50) being located in the mounting cavity (30) and being arranged around a circumferential side of the accommodating cavity (20), the Hall sensor (50) being provided with a plate body (52) and at least two induction structures (51), the plate body (52) being provided with at least two mounting grooves, the at least two induction structures (51) being arranged at the at least two mounting grooves in a one-to-one corresponding manner, the at least two mounting grooves being located at the same height, and the induction magnetic ring (40) being always in a detection range of the induction structures (51).

2. The electronic expansion valve as claimed in claim 1, wherein an included angle X between projections of centers of the two adjacent induction structures (51) and a center of the induction magnetic ring (40) in a height direction of the accommodating cavity (20) and a number n of magnetic poles of the induction magnetic ring (40) satisfy:

$$X=N*(360/n)+(360/2/n) \quad \text{Equation (1)}$$

a unit of the included angle X being a degree; and N being an integer.

3. The electronic expansion valve as claimed in claim 1, wherein distances between the plurality of induction structures (51) and the induction magnetic ring (40) are the same.

4. The electronic expansion valve as claimed in claim 3, wherein a distance L between centers of the two adjacent induction structures (51), a number n of magnetic poles of the induction magnetic ring (40) and a projection distance h from a middle point of a connecting line of centers of the two adjacent induction structures (51) to a center of the induction magnetic ring (40) in a height direction of the accommodating cavity (20) satisfy:

$$L=2*h*\tan[(2*N+1)*\pi/(2*n)] \quad \text{Equation (2)}.$$

5. The electronic expansion valve as claimed in any one of claims 1-4, wherein the induction magnetic ring (40) has a rising position and a falling position, and a circumferential side wall of the induction magnetic ring (40) comprises an induction surface section (41), a distance between the induction surface section (41) and an inner side wall of the accommodating cavity (20) being unchanged in a height direction of the accommodating cavity (20),

   a projection of a top side of the induction surface section (41) to the Hall sensor (50) being located in the induction structures (51) when the induction magnetic ring (40) is located in the falling position, and
   a projection of a bottom side of the induction surface section (41) to the Hall sensor (50) being located in the induction structures (51) when the induction magnetic ring (40) is located in the rising position.

6. The electronic expansion valve as claimed in claim 5, wherein the circumferential side wall of the induction magnetic ring (40) further comprises an upper protective surface section (42) located above the induction surface section (41) and a lower protective surface section (43) located below the induction surface section (41), the upper protective surface section (42) being in arc transition with a top surface of the induction magnetic ring (40), and the lower protective surface section (43) being in arc transition with a bottom surface of the induction magnetic ring (40).

7. The electronic expansion valve as claimed in claim 5, wherein a height of the induction surface section (41) is greater than a motion stroke of the induction magnetic ring (40) in the height direction of the accommodating cavity (20).

8. The electronic expansion valve as claimed in any one of claims 1-4, further comprising drive rotors (60), wherein the drive rotors (60) are arranged in the accommodating cavity (20), the induction magnetic ring (40) is arranged on one side of the drive rotors (60) close to the mounting cavity (30), the drive rotors (60) drive the induction magnetic ring (40) to rotate, and the drive rotors (60) have a number the same as that of the magnetic poles of the induction magnetic ring (40).

9. The electronic expansion valve as claimed in any one of claims 1-4, wherein the Hall sensor (50) is attached to an outer side wall of the accommodating cavity (20).

10. The electronic expansion valve as claimed in claim 9, further comprising fixing frames, where the Hall sensor (50) is attached to the outer side wall of the accommodating cavity (20) by means of the fixing frames, and the fixing frames are attached to the Hall sensor (50), so as to limit the Hall sensor (50) between the outer side wall of the accommodating cavity (20) and the fixing frames.

11. A monitoring method for an electronic expansion valve, wherein the electronic expansion valve has a Hall sensor (50) for monitoring an induction magnetic ring (40) of the electronic expansion valve and drive rotors (60) driving the induction magnetic ring (40) to rotate, the Hall sensor (50) is provided with at least two induction structures (51), and the at least two induction structures (51) are spaced around a circumferential side of the induction magnetic ring (40); and the monitoring method for an electronic expansion valve comprises:

    simultaneously collecting, by the induction structures (51), a motion condition of the induction magnetic ring (40) respectively, so as to form moving magnetic field curves;
    comparing the moving magnetic field curves collected by the different induction structures (51); and
    determining motion conditions of the drive rotors (60) according to phase differences of the different moving magnetic field curves; or determining motion conditions of the drive rotors (60) according to periods of the different moving magnetic field curves; or determining motion conditions of the drive rotors (60) according to phase differences and periods of the different moving magnetic field curves.

12. The monitoring method for an electronic expansion valve as claimed in claim 11, wherein

    when the motion conditions of the drive rotors (60) are determined according to the phase differences of the different moving magnetic field curves, the motion conditions of the drive rotors (60) at least comprise whether the drive rotors (60) rotate, the drive rotors (60) being in a rising phase and the drive rotors (60) being in a falling phase; or
    when the motion conditions of the drive rotors (60) are determined according to the periods of the different moving magnetic field curves, the motion conditions of the drive rotors (60) at least comprise whether the drive rotors (60) rotate, the drive rotors (60) being in a rising phase and the drive rotors (60) being in a falling phase; or
    when the motion conditions of the drive rotors (60) are determined according to the phase differences and the periods of the different moving magnetic field curves, the motion conditions of the drive rotors (60) at least comprise whether the drive rotors (60) rotate, the drive rotors(60) being in a rising phase and the drive rotors (60) being in a falling phase.

13. The monitoring method for an electronic expansion valve as claimed in claim 12, wherein when the motion conditions of the drive rotors (60) are determined according to the phase differences and the periods of the different moving magnetic field curves, the drive rotors (60) being in the rising phase or the falling phase is determined according to the phase differences of the different moving magnetic field curves; and whether the drive rotors (60) rotate is determined according to the periods of the different moving magnetic field curves.

14. The monitoring method for an electronic expansion valve as claimed in claim 13, wherein the electronic expansion valve is provided with an accommodating cavity (20) and a mounting cavity (30), the induction magnetic ring (40) is movably arranged in the accommodating cavity (20) in a height direction of the accommodating cavity (20), and the mounting cavity (30) is at least located on a circumferential outer side of an active area of the accommodating cavity (20) in which the induction magnetic ring (40) is located; and the at least two induction structures (51) are located in the mounting cavity (30) and are arranged around a circumferential side of the accommodating cavity (20), and an included angle X between projections of centers of induction portions of the two adjacent induction structures (51) and a center of the induction magnetic ring (40) in the height direction of the accommodating cavity (20) and a number n of magnetic poles of the induction magnetic ring (40) satisfy:

$$X=N*(360/n)+(360/2/n) \quad \text{Equation (1)}$$

a unit of the included angle X being a degree; and N being an integer.

15. The monitoring method for an electronic expansion valve as claimed in claim 14, wherein distances between the at least two inductions structures (51) and the induction magnetic ring (40) are the same.

16. The monitoring method for an electronic expansion valve as claimed in claim 15, wherein a distance L between the centers of the two adjacent induction structures (51), a number n of the magnetic poles of the induction magnetic ring (40) and a projection distance r from a middle point of a connecting line of centers of the two adjacent induction structures (51) to the center of the induction magnetic ring (40) in the height direction of the accommodating cavity (20) satisfy:

$$L=2*h*\tan[(2*N+1)*\pi/(2*n)] \quad \text{Equation (2)}.$$

Fig. 1

Fig. 2

Fig. 3

Fig. 4

Fig. 5

52

51

Forward direction

0

Hall-1 | N | S | N | S | N | S | N | S | N | S |

Hall-2 | S | N | S | N | S | N | S | N | S | N | S |

0

One period  One period

Fig. 6

Reverse direction

0

Hall-1 | N | S | N | S | N | S | N | S | N | S | N |

Hall-2 | S | N | S | N | S | N | S | N | S | N | S |

One period  One period

Fig. 7

Forward direction ⟶

**0**

Hall-1 | N | S | N | S | N | S | N | S | N | S |

Hall-2 | S | N | S | N | S | N | S | N | S | N | S |

One period     One period

Fig. 8

Reverse direction ⟵

**0**

Hall-1 | N | S | N | S | N | S | N | S | N | S | N |

Hall-2 | S | N | S | N | S | N | S | N | S | N | S |

One period     One period

Fig. 9

## INTERNATIONAL SEARCH REPORT

| International application No. |
|---|
| **PCT/CN2021/127140** |

**A. CLASSIFICATION OF SUBJECT MATTER**

F16K 31/04(2006.01)i; F16K 37/00(2006.01)i; F16K 1/00(2006.01)i

According to International Patent Classification (IPC) or to both national classification and IPC

**B. FIELDS SEARCHED**

Minimum documentation searched (classification system followed by classification symbols)

F16K

Documentation searched other than minimum documentation to the extent that such documents are included in the fields searched

Electronic data base consulted during the international search (name of data base and, where practicable, search terms used)

CNKI; VEN; CNABS; CNTXT: 膨胀阀, 磁, 感应, 传感器, 检测, 监测, 相位, 周期, 转子, expansion valve, magnet, induce, sensor, detect, monitor, phase, period, rotor

**C. DOCUMENTS CONSIDERED TO BE RELEVANT**

| Category* | Citation of document, with indication, where appropriate, of the relevant passages | Relevant to claim No. |
|---|---|---|
| PX | CN 213809121 U (DUN'AN AUTOMOBILE THERMAL MANAGEMENT TECHNOLOGY CO., LTD.) 27 July 2021 (2021-07-27) claims 1-10, description paragraphs 0064-0085 | 1-16 |
| Y | CN 107763285 A (HANGZHOU SANHUA INSTITUTE CO., LTD.) 06 March 2018 (2018-03-06) description, paragraphs 0015-0054, figures 1-10 | 1-16 |
| Y | CN 103326515 A (HARBIN UNIVERSITY OF SCIENCE AND TECHNOLOGY) 25 September 2013 (2013-09-25) description, paragraphs 0020-0036, figures 1-5 | 1-16 |
| A | CN 207398992 U (LUOYANG CHENGGUAN AUTOMATIC CONTROL TECHNOLOGY CO., LTD.) 22 May 2018 (2018-05-22) entire document | 1-16 |
| A | CN 110332326 A (JIYANG COLLEGE OF ZHEJIANG A&F UNIVERSITY) 15 October 2019 (2019-10-15) entire document | 1-16 |
| A | US 2014261814 A1 (SHIMADZU CORPORATION) 18 September 2014 (2014-09-18) entire document | 1-16 |

☑ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 December 2021** | **28 January 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/127140**

**C.     DOCUMENTS CONSIDERED TO BE RELEVANT**

| Category* | Citation of document, with indication, where appropriate, of the relevant passages | Relevant to claim No. |
|---|---|---|
| A | KR 20100108481 A (JO HUONG GIL) 07 October 2010 (2010-10-07)<br>      entire document | 1-16 |

Form PCT/ISA/210 (second sheet) (January 2015)

**INTERNATIONAL SEARCH REPORT**
**Information on patent family members**

International application No.

**PCT/CN2021/127140**

| Patent document cited in search report | | | Publication date (day/month/year) | Patent family member(s) | | | Publication date (day/month/year) |
|---|---|---|---|---|---|---|---|
| CN | 213809121 | U | 27 July 2021 | None | | | |
| CN | 107763285 | A | 06 March 2018 | CN | 107763284 | A | 06 March 2018 |
| | | | | US | 10935155 | B2 | 02 March 2021 |
| | | | | US | 2021140556 | A1 | 13 May 2021 |
| | | | | US | 2019178404 | A1 | 13 June 2019 |
| | | | | WO | 2018033025 | A1 | 22 February 2018 |
| | | | | EP | 3502531 | A1 | 26 June 2019 |
| CN | 103326515 | A | 25 September 2013 | None | | | |
| CN | 207398992 | U | 22 May 2018 | None | | | |
| CN | 110332326 | A | 15 October 2019 | None | | | |
| US | 2014261814 | A1 | 18 September 2014 | US | 9188238 | B2 | 17 November 2015 |
| | | | | JP | 2014178237 | A | 25 September 2014 |
| | | | | JP | 5910548 | B2 | 27 April 2016 |
| KR | 20100108481 | A | 07 October 2010 | None | | | |

Form PCT/ISA/210 (patent family annex) (January 2015)